# EUROPÄISCHE PATENTANMELDUNG

(11) **EP 2 979 924 A1**
(43) Veröffentlichungstag der Anmeldung: **03.02.2016**
(21) Anmeldenummer: 15002095.6
(22) Anmeldetag: 14.07.2015
(51) Int. Cl.: B60Q 1/30, F21S 8/10, G02B 5/12

(54) **LEUCHTEINHEIT FÜR EIN KRAFTFAHRZEUG**

(30) Priorität: 30.07.2014 DE 102014011330
(71) Anmelder: AUDI AG, 85045 Ingolstadt (DE)
(72) Erfinder: Stadler, Manfred, 86633 Neuburg (DE); Woyke, Herbert, 85134 Stammham (DE); Tontsch, Friedrich-Uwe, 85051 Ingolstadt (DE); Marcori, Franco, 33015 Moggio (UD) (IT)
(74) Vertreter: Thielmann, Frank

(57) **Zusammenfassung**

Leuchteinheit (1) für ein Kraftfahrzeug, mit wenigstens einem Leuchtelement, mittels welchem Licht in eine Umgebung (4) der Leuchteinheit (1) abgebbar ist, wobei das Leuchtelement als lumineszierendes Element (6) ausgebildet ist, welches in einer Einstrahlrichtung (E) mit Licht aus der Umgebung (4) bestrahlbar ist, um die Sichtbarkeit der Leuchteinheit (1) bzw. des zugeordneten Kraftfahrzeugs und damit die Sicherheit im Straßenverkehr zu erhöhen.

## Beschreibung

Die Erfindung betrifft eine Leuchteinheit für ein Kraftfahrzeug gemäß dem Oberbegriff von Patentanspruch 1.

Leuchteinheiten in Kraftfahrzeugen strahlen ein Licht in eine Umgebung der Leuchteinheit ab. Dies erfolgt entweder über ein Leuchtmittel der Leuchteinheit oder über ein Reflektorelement der Leuchteinheit, welches insbesondere ein Retroreflektor sein kann, welches von einer externen Lichtquelle, beispielsweise einem Scheinwerfer eines weiteren Kraftfahrzeugs, beleuchtet wird. Unter einem Retroreflektor ist hier ein Element aus einem reflektierenden Material zu verstehen, welches eine einfallende Strahlung weitgehend unabhängig von der Ausrichtung des Reflektors großteils in die Richtung zurück zur Strahlungsquelle reflektiert. Durch das von der Leuchteinheit abgestrahlte Licht ist ein zur Leuchteinheit gehöriges Kraftfahrzeug auch im Dunkeln besser zu sehen, so dass eine Sichtbarkeit und damit eine Sicherheit im Straßenverkehr durch die Leuchteinheiten gewährleistet ist.

Es ist Aufgabe der vorliegenden Erfindung, eine Leuchteinheit zur Verfügung zu stellen, welche die Sichtbarkeit und damit die Sicherheit im Straßenverkehr erhöht.

Diese Aufgabe wird durch eine Leuchteinheit gemäß dem unabhängigen Patentanspruch gelöst.

Eine erfindungsgemäße Leuchteinheit für ein Kraftfahrzeug hat wenigstens ein Leuchtelement, mittels welchem ein Licht in einer Umgebung der Leuchteinheit abgebbar ist. Insbesondere handelt es sich bei der Umgebung dabei um einen Außenraum außerhalb des zugeordneten Kraftfahrzeugs. Entsprechend ist in diesem Fall die Leuchteinheit eine Außenleuchteinheit. Um die Sichtbarkeit und damit die Sicherheit im Straßenverkehr zu erhöhen, ist vorgesehen, dass das Leuchtelement als lumineszierendes Element ausgebildet ist, welches in einer Einstrahlrichtung mit Licht aus der Umgebung bestrahlbar ist. Das Leuchteinheit weist also mindestens einen lumineszierenden Bereich auf. Das Licht aus der Umgebung kann hier insbesondere ein Scheinwerferlicht eines weiteren, nicht der Leuchteinheit zugeordneten Kraftfahrzeugs sein.

Das hat den Vorteil, dass die Leuchteinheit und entsprechend die Begrenzung eines der Leuchteinheit zugeordneten Kraftfahrzeugs erkennbar ist, selbst wenn die Leuchteinheit weder von einer externen Lichtquelle bestrahlt wird, noch von einer internen Lichtquelle oder einem internen Leuchtmittel beleuchtet wird. Es kann somit ohne Stromverbrauch, z.B. in einem ausgeschalteten Zustand des zugeordneten Kraftfahrzeugs selbst wenn die Leuchteinheit nicht durch eine Lichtquelle der Umgebung beleuchtet wird, das zugeordnete Kraftfahrzeug als solches erkannt werden. In Folge wird Sichtbarkeit und Sicherheit erhöht. Überdies ist die Leuchteinheit energiesparend, da sie als passives Bauteil ausgeführt sein kann und zum Zeitpunkt eines Abgebens eines Lichtes in die Umgebung keine aktivierte Stromversorgung erforderlich ist. Hierbei kann das lumineszierende Element selbst die für gesetzlich geforderte Funktionsleuchten, beispielsweise Rücklicht, Rückstrahler, Standlicht, oder ähnliche Leuchten, vorgeschriebenen Leuchtstärken erfüllen. In diesem Fall können die entsprechenden herkömmlichen Leuchteinheiten eingespart werden. Überdies lässt sich so auch in einem ausgestalteten Zustand des Kraftfahrzeugs und zugeordneter Leuchteinheiten ein zusätzliches Designmerkmal realisieren.

In einer vorteilhaften Ausführungsform ist vorgesehen, dass das lumineszierende Element in der Einstrahlrichtung zumindest teilweise hinter einem Retroreflektor angeordnet ist. Ein Licht, welches das lumineszierende Element bestrahlt, hat also zumindest in einem Teilbereich des lumineszierenden Elementes vor dem Bestrahlen, also Auftreffen auf dem lumineszierenden Element, bereits einen Retroreflektor durchstrahlt. Das lumineszierende Element kann hier insbesondere als ein Hinterbau eines Retroreflektors, also z.B. als Gehäuse, Abschatter, Blende oder dergleichen, mit einer herkömmlichen Optik verwendet werden. Das hat den Vorteil, dass ein Licht aus der Umgebung, welches bei einem herkömmlichen Hinterbau von diesem absorbiert würde, für ein Abgeben von Licht in die Umgebung durch die Leuchteinheit genutzt wird, so dass die Lichteffizienz des Retroreflektors, also das Verhältnis aus abgegebenem Licht zu aufgenommenem Licht gesteigert wird. Überdies wird so ein Nachleuchten realisiert, so dass mittels des lumineszierenden Elements auch zeitlich nach einem direkten Anleuchten der herkömmlichen Optik noch ein Licht in die Umgebung der Leuchteinheit abgegeben wird. Es kann die Optik des Retroreflektors auch mit einer im Vergleich zu herkömmlichen Optiken verminderten Qualität gewählt werden, da durch das lumineszierende Element zusätzlich zu dem von der Optik reflektierten Licht ein Licht in die Umgebung der Leuchteinheit abgegeben wird. Es muss also nicht die Güte der verwendeten Optik allein sicherstellen, dass die einschlägigen Normen bezüglich Mindestrückstrahl- bzw. Mindestreflexionswerten erfüllt werden, sondern die Optik in Kombination mit dem lumineszierenden Element.

In einer weiteren Ausführungsform ist vorgesehen, dass das Leuchtelement selbst zumindest teilweise als Retroreflektor ausgeführt ist. Dies kann beispielsweise durch ein Leuchtelement erzielt werden, welches in Aufbau, insbesondere einer die optischen Eigenschaften bestimmenden Geometrie, und Material einem gewöhnlichen Retroreflektor ähnelt, dabei jedoch über in die Leuchteinheit eingelagerte lumineszierende, also nachleuchtende, Pigmente verfügt. Auch hier ergibt sich der Vorteil, dass eine verbesserte Lichtabstrahlung erzielt wird, welche auch zeitlich über den Zeitpunkt eines direkten Anleuchtens durch eine Lichtquelle aus der Umgebung der Leuchteinheit andauert. Entsprechend muss die Güte der Optiken auch hier nicht zwangsweise die vorgeschriebenen einschlägigen Normen erfüllen, da die erforderlichen Rückstrahlwerte von Optik und den nachleuchtenden Stoffen zusammen erbracht werden können. Die Optik kann somit günstiger ausgeführt werden.

In einer weiteren Ausführungsform ist vorgesehen, dass die Leuchteinheit leuchtmittelfrei ausgebildet ist. Das hat den Vorteil, dass die Leuchteinheit besonders platzsparend ist, keine Stromversorgung erfordert und somit flexibel an für ein Erhöhen der Sicherheit im Straßenverkehr relevanten Positionen eines Kraftfahrzeugs angebraucht werden kann. Eine solche Leuchteinheit ist überdies besonders energiesparend.

In einer anderen Ausführungsform ist vorgesehen, dass die Leuchteinheit ein Leuchtmittel aufweist, mittels welchem, insbesondere ausschließlich, das lumineszierende Element beleuchtbar ist. Das hat den Vorteil, dass ein Leuchten der Leuchteinheit auch eingeleitet werden kann, wenn aus der Umgebung nur wenig oder kein Licht das lumineszierende Element bestrahlt. So kann beispielsweise auch nach einer längeren Nachtfahrt, in der aus der Umgebung kein Licht auf das lumineszierende Element gefallen ist, dieses durch das eigene Leuchtmittel bestrahlt worden sein, so dass das zugeordnete Kraftfahrzeug nach dieser Nachtfahrt abgestellt werden kann und die Leuchteinheit beispielsweise eine Parklichtfunktionalität bereitstellen kann, welche nicht mehr auf eine Stromversorgung durch das zugeordnete Kraftfahrzeug zurückgreifen muss. In diesem Fall würde nämlich bevorzugt das Leuchtmittel abgeschaltet werden, so dass lediglich das lumineszierende Element selbst ohne einen Stromverbrauch die Parklichtfunktionalität bereitstellt. Das hast den Vorteil, dass die nachleuchtende Funktionalität der Leuchteinheit oft bereitgestellt werden kann, wenn aus der Umgebung zuvor nicht ausreichend Licht zu dem lumineszierenden Element gedrungen ist.

Insbesondere kann hier vorgesehen sein, dass das Leuchtmittel in Einstrahlrichtung hinter einem nicht-transparenten Element der Leuchteinheit angeordnet ist. Das Leuchtmittel ist also in einem Betrieb der Leuchteinheit in einem montierten Zustand an einem Kraftfahrzeug für einen Betrachter aus der Umgebung der Leuchteinheit nicht sichtbar. Das hat den Vorteil, dass Licht besonders homogen an die Umgebung abgegeben werden kann und insbesondere Teilnehmer am Straßenverkehr nicht von dem Leuchtmittel geblendet werden können.

Weiterhin kann das Leuchtmittel hier Licht einer anderen Wellenlänge als das von dem lumineszierenden Element emittierte Licht haben. Insbesondere kann das von dem Leuchtmittel emittierte Licht auch in einem für Menschen unsichtbaren Spektrum liegen. Das hat den Vorteil, dass das lumineszierende Element besonders effizient zum Leuchten angeregt werden kann und, insbesondere bei der Verwendung von LEDs, also Leuchtdioden, als Leuchtmittel, die Leuchteinheit mit sehr wenig Strom betrieben werden kann.

In einer besonders vorteilhaften Ausführungsform ist vorgesehen, dass die Leuchteinheit eine Sensoreinrichtung umfasst, mittels welcher eine Intensität eines von dem lumineszierenden Element abgegebenen Lichtes messbar und bei einem Unterschreiten eines vorgegebenen Wertes der Intensität ein Leuchtmittel der Leuchteinheit aktivierbar ist. Die Aktivität des lumineszierenden Elements, das Abgeben von Licht durch das lumineszierende Element, wird also durch die Sensoreinrichtung überwacht. Das lumineszierende Element wird entsprechend bei Bedarf durch ein Leuchtmittel der Leuchteinheit "aufgeladen", also mit Licht bestrahlt sodass es wieder Licht abgeben kann. In Folge weist das von dem luminszierenden Element abgestrahlte Licht wieder eine gewisse Mindestintensität auf, die den vorgegebenen Wert der Intensität übertrifft. Das Leuchtmittel der Leuchteinheit kann hier entweder ein speziell zum Bestrahlen des lumineszierenden Elementes vorgesehenes Leuchtmittel sein, wie es oben beschrieben ist, oder aber ein Leuchtmittel, dessen Hauptfunktion das lumineszierende Element nicht betrifft. Ein Beispiel für letzteres wäre eine Glühbirne in einem Scheinwerfer, welche z.B. in ihrer Hauptfunktion ein Abblend- oder Standlicht darstellt, jedoch auf Grund einer spezifischen Geometrie der Leuchteinheit auch das lumineszierende Element bestrahlt und somit dieses Aufladen kann. Das hat den Vorteil, dass ohne einen dauerhaften Stromverbrauch ein dauerhaftes Leuchten der Leuchteinheit mit einer vorbestimmten Helligkeit erzielt werden kann. Somit kann insbesondere eine Parklichtfunktion, welche von der Stromversorgung durch ein Bordnetz weitgehend unabhängig ist, realisiert werden.

In einer weiteren Ausführungsform ist vorgesehen, dass die Einstrahlrichtung des lumineszierenden Elements im Wesentlichen in einer Fahrtrichtung des Kraftfahrzeugs orientiert ist. Besonders vorteilhaft ist dies, wenn die Leuchteinheit ein Leuchtmittel aufweist, mittels welchem das lumineszierende Element beleuchtbar ist. Insbesondere ist die Leuchteinheit hier ein Frontscheinwerfer. Das hat den Vorteil, dass eine energiesparende Standlichtfunktionalität erreicht werden kann.

In einer alternativen Ausführungsform ist vorgesehen, dass die Einstrahlrichtung des lumineszierenden Elements im Wesentlichen entgegen einer Fahrtrichtung des Kraftfahrzeugs orientiert ist. Besonders vorteilhaft ist dies, wenn die Leuchteinheit leuchtmittelfrei ausgebildet ist. Es kann sich dann insbesondere bei der Leuchteinheit um einen Rückstrahler handeln. Das hat den Vorteil, dass eine automatische Standlichtfunktionalität ohne eine externe Energieversorgung oder eine besonders stromsparende Standlichtfunktionalität bereitgestellt werden kann.

In einer weiteren Ausführungsform ist vorgesehen, dass das lumineszierende Element eine konkave Abstrahlungsfläche aufweist, welche im Wesentlichen in Einstrahlrichtung orientiert ist. Insbesondere ist ein Leuchtmittel zum Aufladen des lumineszierenden Elements auf der konkaven Seite des lumineszierenden Elements angeordnet. Das hat den Vorteil, dass eine Abstrahlcharakteristik der Leuchteinheit gezielt beeinflusst werden kann. Insbesondere kann so eine Bündelung des von dem lumineszierenden Elements abgegebenen Lichtes realisiert werden.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine schematische Schnittdarstellung einer beispielhaften Ausführungsform einer Leuchteinheit;
- Fig. 2: eine schematische Schnittdarstellung einer weiteren beispielhaften Ausführungsform einer Leuchteinheit mit einem Leuchtmittel und einer Sensoreinrichtung bei aktiviertem Leuchtmittel; und
- Fig. 3: das Ausführungsbeispiel gemäß Fig. 2 nach einem Ausschalten des Leuchtmittels.

In den Figuren werden gleiche oder funktionsgleiche Elemente mit den gleichen Bezugszeichen versehen.

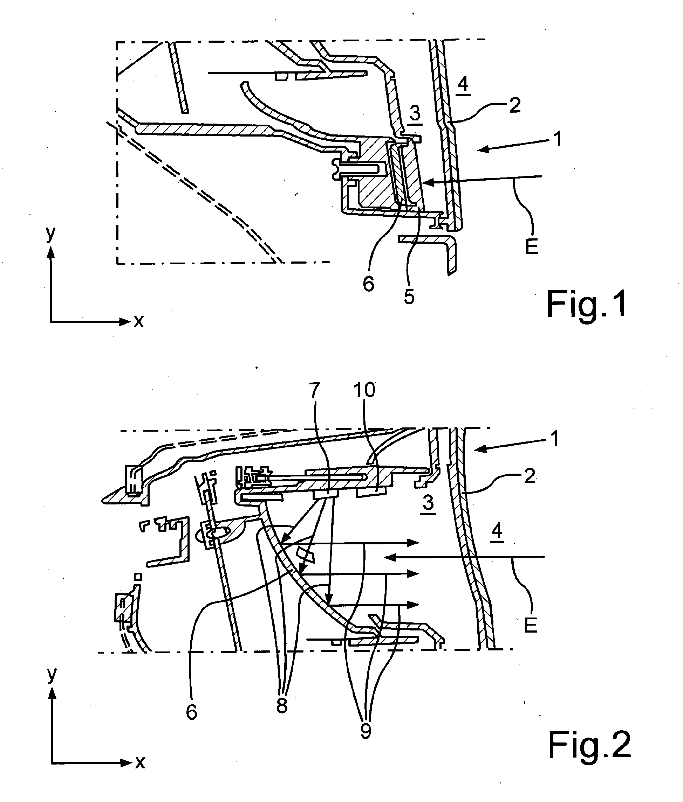

Fig. 1 zeigt eine schematische Schnittdarstellung einer beispielhaften Ausführungsform einer Leuchteinheit. Die Leuchteinheit 1 ist im gezeigten Beispiel als ein Rücklicht eines Kraftfahrzeugs ausgeführt. Ein Glas 2 des Rücklichts grenzt dabei eine Innenraum 3 der Leuchteinheit 1 von einer Umgebung 4 der Leuchteinheit 1 ab. Ein Retroreflektor 5 ist hier im Wesentlichen parallel zu dem Glas 2 an einer dem Glas 2 gegenüberliegenden Wand des Innenraums 3 angeordnet. Der Hinterbau des Retroreflektors 5 ist vorliegend als lumineszierendes Element 6 ausgeführt. Das Glas 2, der Retroreflektor 5 sowie das lumineszierende Element 6 verlaufen hier im Wesentlichen parallel zur y-Richtung. Eine Einstrahlrichtung E, in welcher das lumineszierende Element 6 im vorliegenden Beispiel durch den Retroreflektor 5 hindurch durch ein Licht aus der Umgebung bestrahlbar ist, verläuft vorliegend parallel zur x-Richtung, also senkrecht zur y-Richtung. Das luminsezierende Element 6 ist vorliegend somit in Einstrahlrichtung E vollständig hinter dem Retroreflektor 5 angeordnet.

Tritt nun also ein Licht aus der Umgebung 4, beispielsweise ein Scheinwerferlicht eines auf das der Leuchteinheit 1 zugeordnete Kraftfahrzeug zufahrenden weiteren Kraftfahrzeugs in der Einstrahlrichtung E durch das Glas 2 in den Innenraum 3 und trifft in Folge auf den Retroreflektor 5, so wird zunächst ein Teil des Lichtes von besagtem Retroreflektor 5 zurück, also entgegen der Einstrahlrichtung E, reflektiert. Ein gewisser Anteil des Lichts wird jedoch den Retroreflektor 5 in der Einstrahlrichtung durchdringen und auf das lumineszierende Element 6 treffen. Dieses wird in Folge zum Leuchten angeregt. Das von dem lumineszierenden Element 6 abgegebene Licht durchdringt dann wiederum den Retroreflektor 5 entgegen der Einstrahlrichtung E und wird durch Innenraum 3 und Glas 2 hindurch in die Umgebung 4 des Kraftfahrzeugs abgegeben. Für einen Betrachter, beispielsweise einen Fahrer des besagten zweiten Fahrzeugs erscheint dieses von dem lumineszierenden Element 6 abgegebene Licht als ein von dem Retroreflektor 5 reflektiertes Licht, so dass der Retroreflektor 5 heller erscheint als ein Reflektor, dessen Hinterbau nicht als lumineszierendes Element 6 ausgeführt ist. Überdies gibt das lumineszierende Element 6 auch noch ein Licht in die Umgebung 4 ab, wenn der Retroreflektor 5 nicht mehr von einem Licht aus der Umgebung 4 bestrahlt wird, da das lumineszierende Element 6 nachleuchtet. Somit erscheint es für einen Betrachter in der Umgebung 4 so als würde der Retroreflektor 5 auch leuchten, wenn er nicht von einem Licht aus der Umgebung 4 bestrahlt ist. Entsprechend ist das der Leuchteinheit 1 zugeordnete Kraftfahrzeug besser sichtbar und die Sicherheit im Straßenverkehr erhöht.

In einer alternativen Ausführungsform könnte der Hinterbau des Retroreflektors 5 auch ein gewöhnlicher Hinterbau sein und stattdessen in das Material des Retroreflektors 5 direkt beispielsweise lumineszierende Partikel eingelassen sein, so dass der Retroreflektor 5 einteilig mit dem lumineszierenden Element 6 ausgeführt ist bzw. das lumineszierende Element 6 in seiner Geometrie als Retroreflektor 5 ausgeführt ist. Die Funktionsweise entspricht der beschriebenen, jedoch lässt sich so gegebenenfalls der gewünschte Effekt kostengünstiger realisieren.

Fig. 2 zeigt eine schematische Schnittdarstellung einer weiteren beispielhaften Ausführungsform einer Leuchteinheit mit einem Leuchtmittel und einer Sensoreinrichtung bei aktiviertem Leuchtmittel. Wieder handelt es sich im vorliegenden Beispiel um eine Rückleuchte als Leuchteinheit 1. Der grundlegende Aufbau mit Umgebung 4, Glas 2 und Innenraum 3 entspricht hier im Wesentlichen dem in Fig. 1 gezeigten, wenngleich die Geometrie im Detail eine andere ist. So ist der Innenraum 3 wesentlich größer ausgeführt. Das lumineszierende Element 6 weist vorliegend eine konkave Abstrahlungsfläche auf, welche leicht schräg, im Wesentlichen jedoch in Einstrahlrichtung E bzw. x-Richtung orientiert ist.

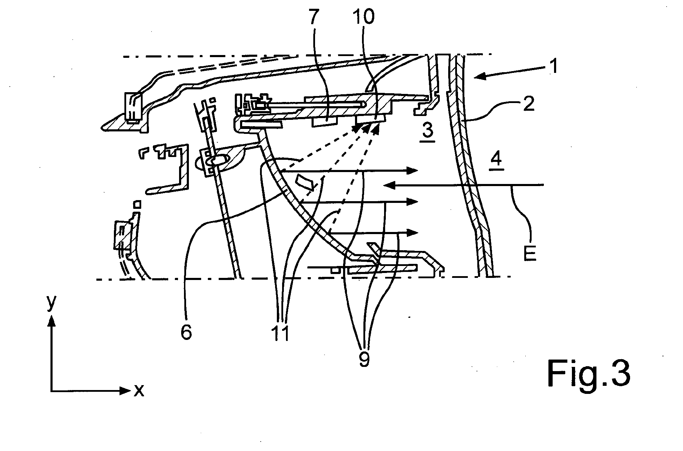

An einer oberen Wand des Innenraums 3 ist vorliegend ein Leuchtmittel 7 angeordnet, mittels welchem das lumineszierende Element 6 beleuchtbar ist. Im gezeigten Beispiel ist durch das Leuchtmittel 7 ausschließlich das lumineszierende Element 6 beleuchtbar, für eine außenstehenden Betrachter ist das Leuchtmittel 7 hier nicht zu erkennen. Vielmehr strahlt die Leuchteinheit 7 entsprechend der eingezeichneten Pfeile 8 Licht auf das lumineszierende Element 6 und lädt dieses somit auf. Dieses Aufladen erfolgt zusätzlich zu einem Aufladen durch ein Bestrahlen des lumineszierenden Elements 6 aus der Umgebung 4 mit Licht in der Einstrahlrichtung E. Von dem lumineszierenden Element 6 wird in Folge des Aufladens durch Licht aus der Umgebung 4 und von dem Leuchtmittel 7 entsprechend der Pfeile 9 Licht in den Innenraum 3 und durch das Glas 2 in den Außenraum 4 abgegeben. Da die Intensität des abgegebenen Lichtes über ein Bestrahlen des lumineszierenden Elements 6 durch das Leuchtmittel 7 beeinflusst werden kann, ist es weitgehend unabhängig von einem Licht, welches aus der Umgebung 4 auf das lumineszierende Element 6 trifft. Entsprechend kann so beispielsweise ein Rücklicht realisiert werden, welches automatisch nach einer längeren Nachtfahrt nach einem Abschalten des zugeordneten Kraftfahrzeugs und entsprechend auch einem Abschalten des Leuchtmittels 7 noch automatisch eine Standlichtfunktionalität aufweist. Eine beispielhafte Funktionsweise bei deaktiviertem Leuchtmittel 7 wird anhand Fig. 3 beschrieben.

Fig. 3 zeigt eine schematische Schnittdarstellung des Ausführungsbeispiel gemäß Fig. 2 nach einem Ausschalten des Leuchtmittels. Im Gegensatz zu der in Fig. 2 dargestellten Situation ist nun das Leuchtmittel 7 nicht aktiv. Auf Grund der nachleuchtenden Eigenschaften des lumineszierenden Elements 6 wird jedoch weiterhin, symbolisiert durch die Pfeile 9, entgegen der Einstrahlrichtung E Licht in die Umgebung 4 der Leuchteinheit 1 abgegeben. Ebenso gelangt gemäß den Pfeilen 11 ein Anteil des von dem lumineszierenden Element 6 abgegebenen Lichtes zu einer Sensoreinrichtung 10, mittels welcher eine Intensität des abgegebenen Lichts messbar ist.

Da die Intensität des von dem lumineszierenden Element 6 abgegebenen Lichtes über die Zeit abnimmt, kann somit bei einem Unterschreiten eines vorgegebenen Wertes der Intensität des von dem lumineszierenden Element 6 abgegebenen Lichtes beispielsweise das Leuchtmittel 7 aktiviert werden. Somit wird dann über ein Bestrahlen des lumineszierenden Elements 6 dessen Leuchtkraft bzw. die Intensität des von diesem abgestrahlten Lichtes wieder erhöht. Ein Bestrahlen, bzw. Aufladen des lumineszierenden Elements kann somit bedarfsabhängig erfolgen, so dass im Gegensatz zu beispielsweise einer Bestrahlung des lumineszierenden Elements 6 durch das Leuchtmittel 7 in regelmäßigen vorgegebenen Zeitintervallen auch ein zufälliges Bestrahlen des lumineszierenden Elements 6 durch ein Licht aus der Umgebung 4, beispielsweise vorbeifahrende Fahrzeuge, bewußt genutzt werden kann um unter geringstmöglichem Stromverbrauch eine vorgegebene Menge Licht in die Umgebung 4 abzustrahlen. Somit wird es beispielsweise ermöglicht, eine maximal energiesparende Standlichtfunktionalität mit einer vorgegebenen Mindesthelligkeit zu realisieren.

## Patentansprüche

1. Leuchteinheit (1) für ein Kraftfahrzeug, mit wenigstens einem Leuchtelement, mittels welchem Licht in eine Umgebung (4) der Leuchteinheit (1) abgebbar ist, wobei das Leuchtelement als lumineszierendes nachleuchtendes Element (6) ausgebildet ist, welches in einer Einstrahlrichtung (E) mit Licht aus der Umgebung (4) bestrahlbar ist,
**dadurch gekennzeichnet, dass**
die Leuchteinheit (1) ein Leuchtmittel (7) aufweist, mittels welchem ausschließlich das lumineszierende nachleuchtende Element (6) beleuchtbar ist und welches an einer oberen Wand eines Innenraums (3) der Leuchteinheit (1) angeordnet ist (S8Z13-14).

2. Leuchteinheit (1) nach Anspruch 1,
**dadurch gekennzeichnet, dass**
das lumineszierende Element (6) in der Einstrahlrichtung (E) zumindest teilweise hinter einem Retroreflektor (5) angeordnet ist.

3. Leuchteinheit (1) nach einem der vorhergehenden Ansprüche,
**dadurch gekennzeichnet, dass**
das Leuchtelement zumindest teilweise als Retroreflektor (5) ausgeführt ist.

4. Leuchteinheit (1) nach einem der vorhergehenden Ansprüche,
**dadurch gekennzeichnet, dass**
das Leuchtmittel (7) in Einstrahlrichtung (E) hinter einem nicht-transparenten Element angeordnet ist.

5. Leuchteinheit (1) nach einem der vorhergehenden Ansprüche,
**dadurch gekennzeichnet, dass**
die Leuchteinheit (1) eine Sensoreinrichtung (10) umfasst, mittels welcher eine Intensität eines von dem lumineszierenden Element (6) abgestrahlten Lichts messbar und bei einem Unterschreiten eines vorgegebenen Wertes der Intensität ein Leuchtmittel der Leuchteinheit (1) aktivierbar ist.

6. Leuchteinheit (1) nach einem der vorhergehenden Ansprüche,
**dadurch gekennzeichnet, dass**
die Einstrahlrichtung (E) des lumineszierenden Elements (6) im Wesentlichen in einer Fahrtrichtung des Kraftfahrzeugs orientiert ist.

7. Leuchteinheit (1) nach einem der Ansprüche 1 bis 5,
**dadurch gekennzeichnet, dass**
die Einstrahlrichtung (E) des lumineszierenden Elements (6) im Wesentlichen entgegen einer Fahrtrichtung des Kraftfahrzeugs orientiert ist.

8. Leuchteinheit (1) nach einem der vorhergehenden Ansprüche,
**dadurch gekennzeichnet, dass**
das lumineszierende Element (6) eine konkave Abstrahlungsfläche aufweist, welche im Wesentlichen in Einstrahlrichtung (E) orientiert ist.
